(19)

**Europäisches Patentamt**

**European Patent Office**

**Office européen des brevets**

(11) **EP 2 623 924 A1**

(12) **EUROPEAN PATENT APPLICATION**

(43) Date of publication:
**07.08.2013 Bulletin 2013/32**

(51) Int Cl.:
**G01B 9/02** (2006.01)

(21) Application number: **13000404.7**

(22) Date of filing: **28.01.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.02.2012 JP 2012020526**

(71) Applicant: **Canon Kabushiki Kaisha Tokyo (JP)**

(72) Inventor: **Okuda, Hiroshi Tokyo (JP)**

(74) Representative: **Weser, Wolfgang Weser & Kollegen Patentanwälte Radeckestrasse 43 81245 München (DE)**

(54) **Measurement method using interferometer and non-transitory tangible medium storing its program**

(57) A measurement method includes calculating a central frequency $f_{cen}$ expressed by the following expression where f is a frequency and DataC(f) is data expressed in a Fourier spectrum of an interference signal between reference light and test light that does not contain stray light generated in an interferometer, which is obtained by subtracting data expressed in the Fourier spectrum of an interference signal between the reference light and stray light from data expressed in the Fourier spectrum of an interference signal between the reference light and test light that contains the stray light, and

$$f_{cen} = \frac{\left| \sum DataC(f) \times f \right|}{\left| \sum DataC(f) \right|}$$

calculating a phase of the test light that does not contain the stray light at the central frequency that has been calculated, based upon a phase and amplitude of the test light that contains the stray light at the central frequency and a phase and amplitude of the stray light at the central frequency.

FIG. 5

EP 2 623 924 A1

**Description**

BACKGROUND OF THE INVENTION

Field of the Invention

The present invention relates to a measurement method utilizing an interferometer and a non-transitory recording medium configured to store a program of the measurement method.

Description of the Related Art

In measuring a shape of a test surface or a test distance utilizing an interferometer, major problems are a periodic error contained in an optical path length and a deterioration of a measurement precision due to another polarization component leakage in which a polarization component is not normally separated into P-polarized light and S-polarized light and stray light that occurs in the interference optical system.

Accordingly, Japanese Patent No. 4,717,308 discloses a method for correcting the periodic error by separating a leading term representative of test light that does not contain stray light from an appendix term representative of the stray light in a Fourier spectrum utilizing a Doppler shift. More specifically, this method quantifies the appendix term representative of the stray light, and removes the quantified appendix term from an overlap between the leading term and the appendix in the Fourier spectrum. On the other hand, Japanese Patent Laid-Open No. 2008-177561 proposes a method for minimizing a stray light quantity by inclining an optical axis of a beam and a normal of a lens in an interferometer.

In measuring the shape of the test surface, the reflectance of the test light on the test surface reduces due to light scattering etc. when the test surface is a rough surface. In this case, the rough test surface is moved relative to a light flux in a direction perpendicular to the optical axis, and this movement corresponds to a Doppler shift of the mirror surface by a micro distance in the optical axis direction. Then, due to the Doppler shift, a signal of the test light that does not contain the stray light and a signal of the stray light can become close to each other in the Fourier spectrum. When peak values of the test light and the stray light become similar and close to each other, it becomes difficult to separate them from each other.

According to the method disclosed in Japanese Patent No. 4,717,308, the quantified appendix term contains phase and amplitude information at a peak value in the Fourier spectrum, and a sufficient correction is provided only when the leading term and the appendix term perfectly overlap each other. In addition, the method disclosed in Japanese Patent Laid-Open No. 2008-177561 causes an aberration of the lens or another measurement error, and cannot eliminate the stray light generated in the lens.

SUMMARY OF THE INVENTION

The present invention provides a measurement method for precisely measuring a shape of a test surface or a test distance using an interferometer, and a non-transitory recording medium storing its program.

The present invention in its first aspect provides a measurement method as specified in claims 1 to 11. The present invention in its second aspect provides a program as specified in claim 12. The present invention in its third aspect provides a non-transitory tangible medium as specified in claim 13.

Further features of the present invention will become apparent from the following description of exemplary embodiments with reference to the attached drawings.

BRIEF DESCRIPTION OF THE DRAWINGS

FIG. 1 is an optical path diagram of a measurement apparatus according to a first embodiment of the present invention.

FIG. 2 is an explanatory view of stray light that can be generated in the measurement apparatus illustrated in FIG. 1 according to the first embodiment.

FIG. 3 is a graph of an illustrative Fourier analysis with a Doppler shift according to the first embodiment.

FIG. 4 is a graph of an illustrative Fourier analysis with no Doppler shift according to the first embodiment.

FIG. 5 is a flowchart of a measurement method according to the first embodiment of the present invention.

FIG. 6 is a graph illustrating an FFT analysis result of a signal with a test object speed of 1m/sec as one example in S1 illustrated in FIG. 5 according to the first embodiment.

FIG. 7 is a view of a light shielding plate as another example in S1 illustrated in FIG. 5 according to the first embodiment.

FIG. 8 illustrates a frequency characteristic of an amplitude reflectance $r_{err}$ of stray light caused from a condenser lens illustrated in FIG. 1 calculated by the DFT according to the first embodiment.

FIG. 9 illustrates a frequency characteristic of a phase $\Phi_{err}$ of the stray light of the condenser lens illustrated in FIG. 1 calculated by the DFT according to the first embodiment.

FIG. 10 is a graph of absolute values of frequency characteristics of an interference signal between stray light and reference light, an interference signal between reference light and test light that contains stray light, and an interference signal between reference light and test light that does not contain the stray light according to the first embodiment.

FIG. 11 is a graph of a relationship of parameters calculated in S9 in FIG. 5 on a complex plane according to the first embodiment.

FIG. 12 is an optical path diagram of a measurement apparatus according to a second embodiment of the present invention.

DESCRIPTION OF THE EMBODIMENTS

A description will now be given of a variety of embodiments according to the present invention, with reference to the accompanying drawings.

FIRST EMBODIMENT

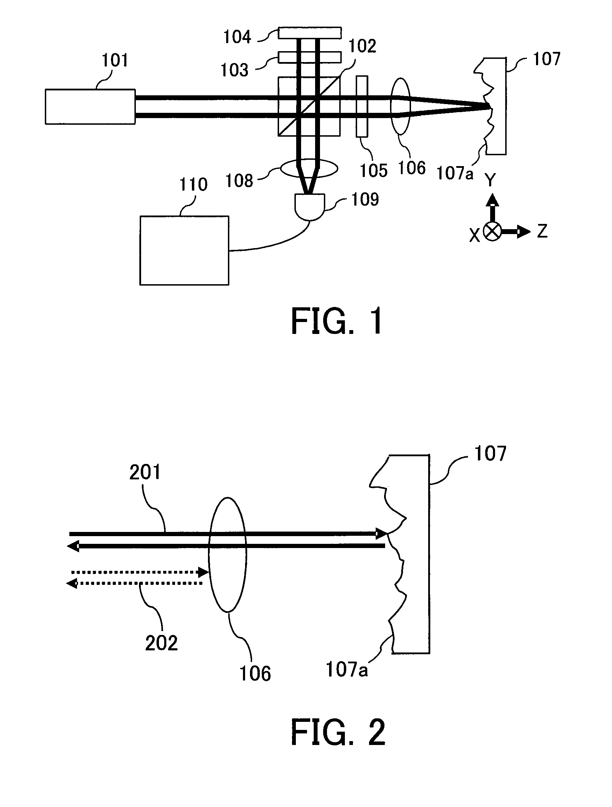

FIG. 1 is an optical path diagram of an interferometer system according to a first embodiment. The interferometer system serves as a measurement apparatus configured to measure a shape of a test object 107 utilizing an interferometer, and it is assumed that a test surface 107a of the test object 107 is a rough surface. The first embodiment calculates a phase utilizing a heterodyne method.

In calculating a two-dimensional shape of the test surface 107a of the test object 107, the test object 107 is moved by a driver (not illustrated) on an XY plane that is perpendicular to the optical axis parallel to the Z direction. This driver (not illustrated) can move the test object 107 also in the Z direction in separating the stray light component etc. This movement is a relative movement between the test object 107 and the light flux irradiated onto the test object 107 (or optical axis), and it is sufficient that one of the light flux and the test object 107 may be moved relative to the other.

The interferometer system according to this embodiment is applicable to a measurement apparatus configured to measure a test distance. In this case, a condenser lens 106 is removed so as to provide a parallel beam (light flux) and to measure a long distance, the test surface 107a of the test object 107 is not a rough surface but a mirror surface, and the test object 107 is relatively moved in the optical axis direction parallel to the Z direction by the driver (not illustrated).

The light source 101 is a heterodyne light source (laser) configured to emit a beam (light flux) of S-polarized light having a frequency $f_{ref}$ and a beam of P-polarized light having a frequency $f_{sig}$. These beams enter a polarization beam splitter ("PBS") 102, and the S-polarized light beam is reflected on a polarization splitting plane of the PBS 102, and the P-polarized beam transmits through the polarization splitting plane of the PBS 102.

The S-polarized beam reflected on the polarization splitting surface of the PBS 102 is turned into circularly polarized light after transmitting a quarter waveplate 103, is reflected by a reference mirror 104, transmits the quarter waveplate 103 as P-polarized light, and re-enters the PBS 102. The re-introduced P-polarized light transmits through the polarization splitting surface of the PBS 102. This beam will be referred to as "reference light" hereinafter.

On the other hand, the P-polarized beam that has transmitted the polarization splitting surface of the PBS 102 transmits through a quarter waveplate 105, is turned into circularly polarized light, and is reflected on the test surface 107a of the test object 107 arranged near a spot position of the beam after the beam diameter is narrowed by the condenser lens 106. The beam diameter of the reflected P-polarized light is then widened, and the light is turned into parallel light by the condenser lens 106, again transmits the quarter waveplate 105, becomes S-polarized light, and again enters the PBS 102. The re-introduced S-polarized beam is reflected on the polarization splitting surface of the PBS 102. This beam will be referred to as "test light" hereinafter.

The test light and the reference light are merged by the PBS 102, enter a condenser lens 108, and are received by a detector 109. The received interference signal is sent to an analyzer 110, which calculates a phase at a point at which the beam is irradiated on the test object 107. The analyzer 110 includes a microcomputer, and serves as a controller configured to control each component in the interferometer system.

The shape of the test surface 107a of the test object 107 is calculated by calculating the phase at each point by moving the test object 107 in the XY directions perpendicular to the optical axis. When the roughness in the spot diameter is larger than the light source wavelength, a synthetic wavelength is produced and measured using a plurality of light sources. The synthetic wavelength $\Lambda$ derived from two light source wavelengths $\lambda_1$ and $\lambda_2$ is given as follows:

$$\Lambda = \frac{\lambda_1 \lambda_2}{|\lambda_1 - \lambda_2|} \qquad (1)$$

The synthetic wavelength $\Lambda$ is higher than each of the light source wavelengths $\lambda_1$ and $\lambda_2$. Thus, the synthetic wavelength enables a measurement even when the roughness in the spot diameter is larger than the light source wavelength.

Next follows a description of a periodic error that can be generated in this interferometer system. At certain time t, electric fields $E_{ref}$(t) and $E_{sig}$ (t) of ideal reference light and ideal test light of the detector 109 will be expressed as follows:

$$E_{ref}(t) = \exp\{i(2\pi f_{ref} t)\} \qquad (2)$$

$$E_{sig}(t) = \exp\{i(2\pi(f_{sig} - 2f_{Dop}(t)) t + \varphi_{tar}(x,y,t))\} \qquad (3)$$

Herein, $f_{Dop}$ (t) is a Doppler shift associated with a change of a test distance, and $\Phi_{tar}$ (x, y, t) is a phase at a point (x, y) at which the beam is irradiated onto the object. A proportional coefficient is omitted for a simpler description. The test distance z at the time t is given as follows where $\lambda_{sig}$ is a light source wavelength on the test light:

$$z(t = t) = \lambda_{Sig} \times \frac{\varphi_{tar}(x,y,t)}{4\pi} \qquad (4)$$

The test surface 107a of the test object 107 is a rough surface, and when it is moved in the XY directions, a target distance changes (in the Z direction) due to the roughness, and a Doppler shifts occurs. An error component that is generally referred to as a "periodic error" is added to $E_{ref}$(t) and $E_{sig}$ (t) on the actual detector 109 due to another polarization component and the stray light because an extinction factor of the PBS 102 is not ideal.

FIG. 2 is a view for explaining the stray light that is generated hard to eliminate in measuring the rough surface by the reflections on the condenser lens 106. In FIG. 2, a solid arrow 201 illustrates a beam that transmits the condenser lens 106, is reflected on the test object 107, and again transmits the condenser lens 106. A dotted arrow 202 illustrates a beam that is reflected on the condenser lens 106, and does not reach the test object 107. This beam 202 becomes the stray light. In this case, as disclosed in Japanese Patent Laid-Open No. 2008-177561, when the reflected light of the condenser lens 106 is shifted from a coaxial state with the test object by inclining the condenser lens 106, the aberration undesirably occurs.

When the test light that does not contain the stray light and the stray light are coaxial with each other, the electric field $E_{ref}$(t) of the reference light on the detector 109 is similar to the expression (2), but the electric field $E_{sig}$ (t) of the test light is expressed as follows:

$$E_{sig}(t) = r_{tar}(x,y)\exp\left(i\left(2\pi\left(f_{sig} - 2f_{Dop}(t)\right)t + \varphi_{tar}(x,y,t)\right)\right)$$
$$+ r_{err}\exp\left(i\left(2\pi f_{sig}t + \varphi_{err}\right)\right)$$

$$(5)$$

Herein, $r_{tar}(x,y)$ is a product between two amplitude transmittances of the condenser lens 106 and the amplitude reflectance of the test object 107, $r_{err}$ is an amplitude transmittance of the condenser lens 106, and $\Phi_{err}$ is a phase of the stray light by the condenser lens 106. The amplitude reflectance of the test object 107 significantly varies according to a position (x, y) onto which the bam is irradiated. On the other hand, $r_{err}$ and $\Phi_{err}$ are almost constant and are expressed as constants.

The intensity on the detector 109 is expressed as follows from the expressions (2) and (5):

$$I(t) = \left|E_{ref}(t) + E_{sig}(t)\right|^2$$
$$= 1 + r_{tar}^2(x,y) + r_{err}^2$$
$$+ 2r_{tar}(x,y)r_{err}\cos\left(4\pi f_{Dop}(t)t - \left(\varphi_{tar}(x,y,t) - \varphi_{err}\right)\right)$$
$$+ 2r_{err}\cos\left(2\pi\Delta ft - \varphi_{err}\right)$$
$$+ 2r_{tar}(x,y)\cos\left(2\pi\left(\Delta f + 2f_{Dop}(t)\right)t - \varphi_{tar}(x,y,t)\right)$$

$$(6)$$

Herein, the following expression is established, and $\Delta f$ will be generally referred to as a beat frequency:

$$\Delta f = f_{ref} - f_{sig} \quad (7)$$

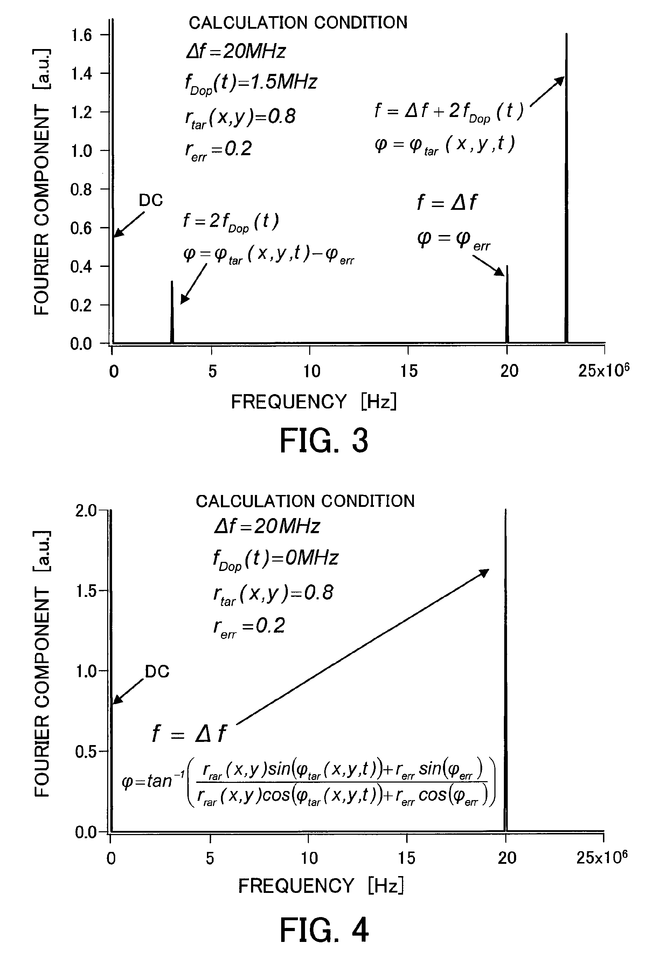

The analyzer 110 provides a Fourier analysis for the expression (6). FIG. 3 illustrates an illustrative Fourier analysis under the measurement condition in which the Doppler shift occurs. In FIG. 3, the abscissa axis denotes a frequency (Hz), and an ordinate axis denotes a Fourier component (arbitrary unit). Except the DC component, there are Fourier components at three frequencies and the fourth term, the fifth term, and the sixth term in the expression (6) correspond to these three frequencies in order from the lowest frequency. FIG. 3 illustrates a phase calculated with the three frequencies. As understood, $\Phi_{tar}(x, y, t)$ can be calculated by calculating a phase at the frequency of $\Delta f + 2f_{Dop}(t)$. Therefore, no error occurs even when the stray light is generated from the condenser lens 106.

On the other hand, an error occurs when no Doppler shift occurs. FIG. 4 illustrates an illustrative Fourier analysis under the measurement condition in which no Doppler shift occurs. In FIG. 4, the abscissa axis denotes a frequency (Hz) and the ordinate axis denotes a Fourier component (arbitrary unit). Except the DC component, there is a Fourier component at one frequency $\Delta f$. This corresponds to an addition between the fifth and six terms in the expression 4 when $f_{Dop}(t)=0$. Thereby, a phase of the frequency $\Delta f$ is calculated as follows:

$$\varphi_{mea}(x,y,t) = \tan^{-1}\left(\frac{r_{tar}(x,y)\sin(\varphi_{tar}(x,y,t)) + r_{err}\sin(\varphi_{err})}{r_{tar}(x,y)\cos(\varphi_{tar}(x,y,t)) + r_{err}\cos(\varphi_{err})}\right)$$

(8)

Thus, an error occurs when there is no Doppler shift. When $r_{tar}$ (x, y) is constant, a periodic error is added according to a test distance, but when $r_{tar}$ (x, y) is unconstant and significantly changes, an error is generated aperiodically.

For the examples illustrated in FIGs. 3 and 4, a sampling rate, a Doppler shift, and the number of data are selected such that the bottom of the Fourier component does not spread even when a rectangular window function is used for the Fourier analysis. Moreover, in the example illustrated in FIG. 4, the Doppler shift is made completely zero.

However, the actual Doppler shift can have a variety of values. It is thus necessary for the Fourier analysis of actual data to use a window function so that both ends of the data can approach to zero in the actual space rather than the rectangular window. In addition, as described above, in order to measure the shape of the rough surface, it is necessary to move the optical axis relative to the rough surface in the perpendicular direction.

Hence, the optical length continues to change in the measurement, and a small amount of the Doppler shift may always occur depending upon the relative moving speed and the shape of the rough surface. Moreover, in the rough surface measurement, the amplitude reflectance of the test object 107 becomes a very small value equivalent to or smaller than the amplitude reflectance of the condenser lens 106 which generates the stray light.

Two errors occur in the above measurement conditions. First, since the Fourier components of $\Delta f$ and $\Delta f + 2f_{Dop}$ (t) are very close to each other and their amplitudes are equivalents, it is difficult to precisely calculate $\Delta f + 2f_{Dop}$ (t) as a frequency of a measurement signal and an error is consequently added to the calculated phase. Moreover, since the bottoms of $\Delta f$ and $\Delta f + 2f_{Dop}$ (t) overlap each other, an error is added to a calculated phase. When the Doppler shift is completely zero, $\Delta f$ and $\Delta f + 2f_{Dop}$ (t) perfectly accord with each other, and an error becomes as expressed in the expression (8). However, errors are actually added under influences of $r_{err}$ and $\Phi_{err}$ different from the expression (8).

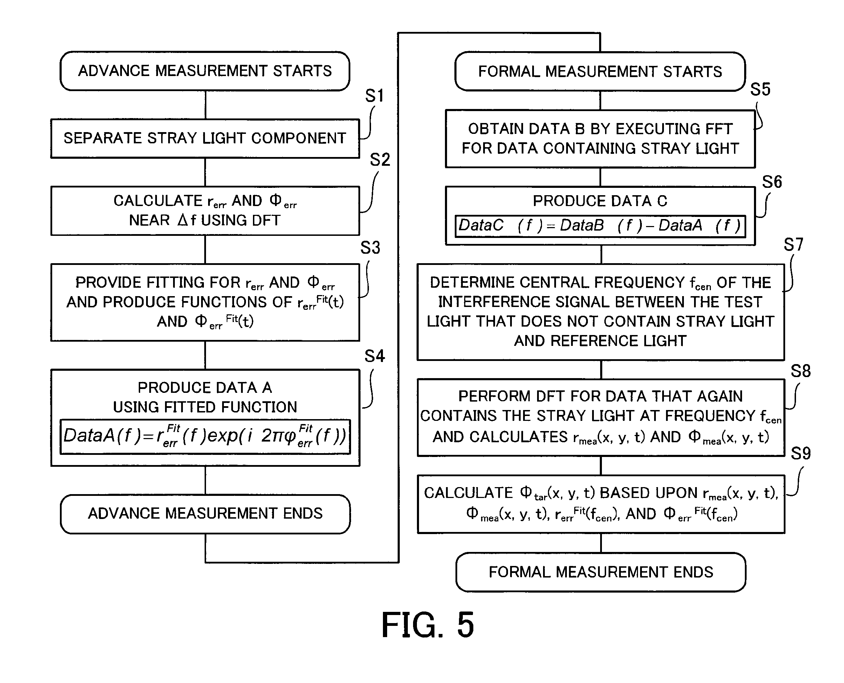

FIG. 5 is a flowchart of the measurement method according to the first embodiment, and "S" stands for the "step." The measurement method illustrated in FIG. 5 can be implemented as a program that enables a computer to execute a function of each step, and executable by the analyzer 110 in this embodiment. The program may be stored in a computer readable (recording) medium or non-transitory tangible medium.

The measurement method of this embodiment contains an advance measurement and a formal measurement.

The advance measurement separates the stray light component from the test light, calculates frequency characteristics of $r_{err}$ and $\Phi_{err}$, and produces fitting functions $r_{err}^{Fit}$ (f) and $\Phi_{err}^{Fit}$ (f) using the frequency f. The formal measurement subtracts the influences of $r_{err}$ and $\Phi_{err}$ from a result of a fast Fourier transform ("FFT") of data of the interference signal between the reference light and the test light that contains the stray light, and precisely determines the central frequency $f_{cen}$ of the interference signal between the reference light and the test light that does not contain the stray light. Thereby, the above first error can be reduced.

Next, a discrete Fourier transform ("DFT") is executed for the data of the interference signal between the reference light and the test light that again contains the stray light, and calculates the amplitude $r_{mea}$ (x, y, t) and phase $\Phi_{mea}$(x, y, t) of the test object that contains the stray light. Finally, $\Phi_{tar}^{Fit}$ (f) is calculated using vector operations and $r_{err}^{Fit}$ ($f_{cen}$), $\Phi_{err}^{Fit}$ ($f_{cen}$), $r_{mea}$ (x y, t) and $\Phi_{mea}$(x, y, t). Since the fitting function is used for the amplitude and phase of the stray light and $f_{cen}$ is used for its frequency, the above second error is reduced.

Illustrative parameters used for calculations of the simulation are a sampling rate of 50 MHz, a beat frequency of 20 mHz, 10,000 data, and a light source wavelength of 1 $\mu$m, $r_{tar}$ (x, y)=$r_{err}$, $\Phi_{tar}$ (x, y, t)=0.1$\lambda$, and $\Phi_{err}$=0.3$\lambda$.

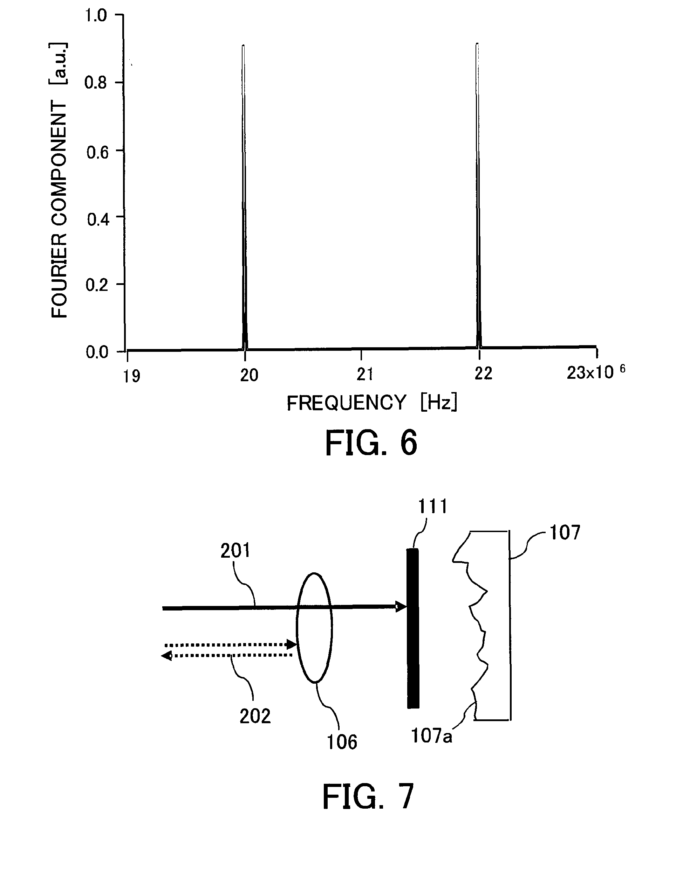

In the advance measurement, the stray light is initially separated (S1). One method for separating the stray light is to generate a Doppler shift, as described above. FIG. 6 illustrates an FFT analysis result of a signal with the test object speed 1 m/sec. In FIG. 6, the abscissa axis denotes a frequency (Hz), and the ordinate axis denotes a Fourier component (arbitrary unit). A left peak corresponds to the stray light, and a right peak corresponds to the test light. The Blackman window expressed by the expression (9) is used for the window function.

$$Window(n) = 0.450 - 0.494 \times \cos\left(\frac{2\pi}{N}n\right) + 0.057 \times \cos\left(\frac{2\pi}{N}2n\right)$$

(9)

As illustrated in FIG. 6, it is confirmed that the stray light is separated. In the subsequent simulation, the FFT and DFT are frequently used but the window function always utilizes the Blackman window expressed by the expression (9). Nevertheless, another window function other than Blackman may be utilized, such as a hann window, a hamming window, and a Kaiser window.

Instead of the Doppler shift, as illustrated in FIG. 7, a light shielding plate 111 may be inserted into and ejected from a space between the condenser lens 106 and the test object 107. The beam 202 that results in the stray light returns to the interference measurement, but the beam 201 incident upon the test object 107 is shielded by the light shielding plate 111. Therefore, only the stray light component can be measured.

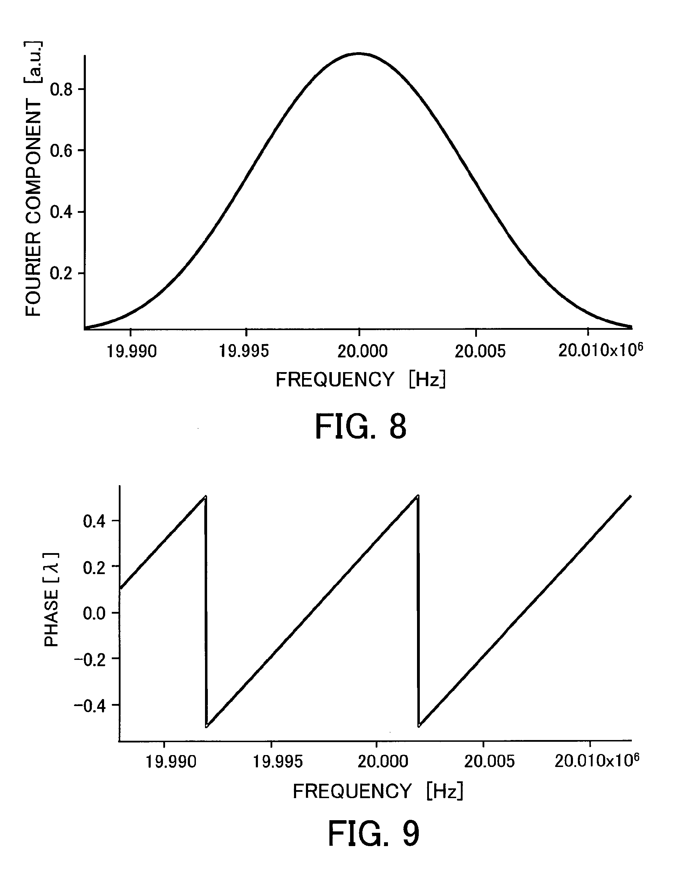

Next, $r_{err}$ and $\Phi_{err}$ near the beat frequency are calculated using the DFT rather than the FFT (S2). Herein, "near" covers a frequency range in which the bottom of $r_{err}$ spreads near the beat frequency. For example, in FIG. 8, which will be described later, $r_{err}$ spread between about 19.990 MHz and about 20.010 MHz near the beat frequency of 20 MHz, this frequency range is picked up.

In the FFT, the measurable frequency depends upon the measurement time period. The frequency resolution becomes rough depending upon the measurement time period, and the precision of the fitting function, which will be described later, may remarkably lower. However, the amplitude and phase of the arbitrary frequency can be calculated in the DFT, and the fitting function can be highly precisely calculated.

FIG. 8 illustrates the calculation result of $r_{err}$, and FIG. 9 illustrates the calculation result of $\Phi_{err}$. In FIG. 8, the abscissa axis denotes a frequency (Hz), and the ordinate axis denotes a Fourier transform (arbitrary unit). In FIG. 9, the abscissa axis denotes a frequency (Hz), and the ordinate axis denotes a phase ($\lambda$).

The frequency resolution is 5,000 Hz for the sampling rate of 50 MHz and 10,000 data in the FFT, whereas the frequency resolution is calculated with 25 Hz in the DFT (illustrated in FIGs. 8 and 9). Therefore, the frequency resolution with the DFT is 200 times as high as that with the FFT. In addition, while this embodiment sets the frequency resolution to 25 Hz, it may be varied for a higher frequency resolution.

Next, $r_{err}$ and $\Phi_{err}$ are fitted as a function of f, and the fitting functions $r_{err}^{Fit}$ (f) and $\Phi_{err}^{Fit}$ (f) are produced (S3). $r_{err}$ is fitted with a Gaussian function. Another function may be utilized, such as a Lorentzian function and a void function. $\Phi_{err}$ is fitted with a linear function.

Next, data A is produced with a fitted function (S4). The data A is provided as follows, and serves as data of an interference signal between the reference light and the stray light generated in the interferometer, and expressed in a Fourier spectrum:

$$DataA(f) = r_{err}^{Fit}(f)\exp(i\ 2\pi\phi_{err}^{Fit}(f)) \qquad (10)$$

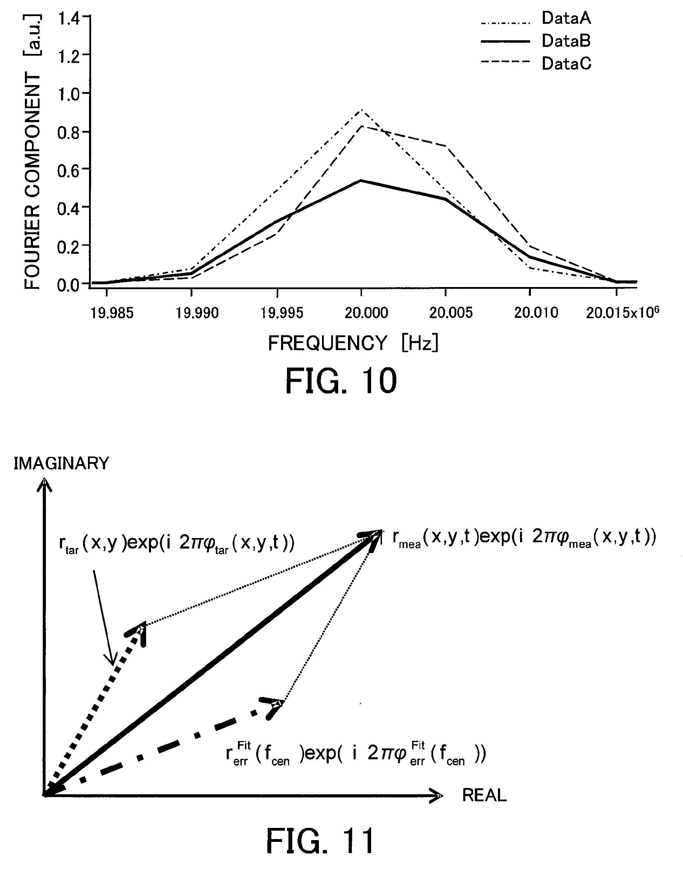

FIG. 10 illustrates a value of the absolute value of the data A near the beat frequency. In FIG. 10, the abscissa axis denotes a frequency (Hz), and the longitudinal axis denotes a Fourier component (arbitrary unit). An alternate long and short dash line denotes an absolute value of the data A. As described later, this is used to precisely determine the central frequency $f_{cen}$ of the interference signal between the reference light and the test light that does not contain the stray light. Herein, a data interval of the abscissa axis is expressed according to the frequency resolution of the FFT. In addition, the data A is calculated using the fitting function, but the stray light may be separated in S1 and the result of the FFT may be directly used.

Next, the formal measurement starts. Herein, assume that the test object speed is 1 mm/sec.

Initially, the FFT is performed for data of the interference signal between and the reference light and the test light that contains the stray light, and data B is obtained (S5). The data B is data of the interference signal between the reference light and the test light that contains the stray light expressed in the Fourier spectrum. A solid line in FIG. 10 denotes a value of the data B near the beat frequency. This is a result of a mixture between the frequency 20 MHz of the interference signal between the stray light and the reference light and the frequency of 20.002 MHz (where the Doppler shift is 1kHz) of the interference signal between the reference light and the test light that does not contain the stray light.

Next, data C is produced (S6). The data C (Data C(f)) is data expressed by an expression (11) of the interference signal between the reference light and the test light that does not contain the stray light in Fourier spectrum:

$$DataC(f) = DataB(f) - DataA(f) \qquad (11)$$

A dotted line in FIG. 10 illustrates a value of the absolute value of the data C near the beat frequency. When the absolute value of the data C is compared with the absolute value of the data B, the absolute value of the data C shifts in a direction in which the center of the frequency increases. This means that the data C removes the influence of the frequency 20 MHz of the interference signal between the stray light and the reference light.

Next, the central frequency $f_{cen}$ between the reference light and the test light that does not contain the stray light is determined based upon the data C (S7). The central frequency $f_{cen}$ is provided by the expression (12):

$$f_{cen} = \frac{\left| \sum DataC(f) \times f \right|}{\left| \sum DataC(f) \right|} \qquad (12)$$

Next, the DFT is performed for the data of the interference signal between the reference signal and the test light that again contains the stray light, and the amplitude $r_{mea}$ (x, y, t) and phase $\Phi_{mea}$(x, y, t) are calculated (S8).

At the end of the formal measurement, $\Phi_{tar}$ (x, y, t) is calculated based upon $r_{mea}$ (x, y, t), $\Phi_{mea}$(x, y, t), $r_{err}^{Fit}$ ($f_{cen}$) and $\Phi_{err}^{Fit}$ ($f_{cen}$) (S9). FIG. 11 illustrates a relationship among them on the complex plane. The vector operation enables a final target $\Phi_{tar}$ (x, y, t) to be calculated.

It is confirmed as a simulation result that an error amount is a very large RMS of 110 m$\lambda$ with the test object speed of $\pm$1mm/sec or smaller when the method of this embodiment is not used whereas the RMS is reduced down to 2.8 m$\lambda$, which is about 1/40 times as low as the above RMS, according to this embodiment is used.

This embodiment can reduce the periodic error even in the rough surface measurement in which the reflectance of the test object significantly changes.

SECOND EMBODIMENT

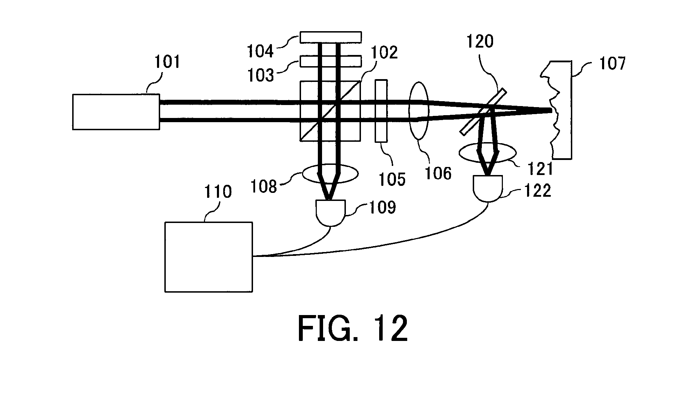

A second embodiment is different in S9 illustrated in FIG. 5. FIG. 12 is an optical path diagram of an interferometer system according to a second embodiment. A half-mirror (beam splitter) 120 is arranged between the condenser lens 106 and the test object 107. Thereby, the light reflected (split) on the test object 107 is reflected on the half-mirror 120, condensed by the condenser lens 121, and received by the detector 122. The received signal is sent to the analyzer 110. $r_{tar}$ (x, y, t) can be directly calculated by analyzing the received signal intensity.

When the Doppler shift is sufficiently small, and the central frequency $f_{cen}$ of the test light that does not contain the stray light is distinct, the expression (8) can be rewritten as follows: $\Phi_{tar}$ (x, y, t) can be calculated from Expression 13.

$$\varphi_{mea}(x, y, t) =$$

$$\tan^{-1}\left( \frac{r_{tar}(x, y)\sin(\varphi_{tar}(x, y, t)) + r_{err}^{Fit}(f_{cen})\sin(\varphi_{err}^{Fit}(f_{cen}))}{r_{tar}(x, y)\cos(\varphi_{tar}(x, y, t)) + r_{err}^{Fit}(f_{cen})\cos(\varphi_{err}^{Fit}(f_{cen}))} \right)$$

$$(13)$$

This embodiment can reduce the periodic error even in the rough surface measurement in which the reflectance of the test object significantly changes. While this embodiment limits the cause of the stray light to the condenser lens 106, the stray light caused by another optical element surface can be equivalently corrected.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

**1.** A measurement method configured to calculate a shape of an object surface of a test object or a test object distance utilizing an interferometer, **characterized in that** the measurement method comprises:

calculating (S7) a central frequency f<sub>cen</sub> expressed by the following expression where f is a frequency and DataC (f) is data expressed in a Fourier spectrum of an interference signal between reference light and test light that does not contain stray light generated in the interferometer, which is obtained by subtracting data expressed in the Fourier spectrum of an interference signal between the reference light and stray light from data expressed in the Fourier spectrum of an interference signal between the reference light and test light that contains the stray light; and

$$f_{cen} = \frac{\left| \sum DataC(f) \times f \right|}{\left| \sum DataC(f) \right|}$$

calculating (S9) a phase of the test light that does not contain the stray light at the central frequency that has been calculated, based upon a phase and amplitude of the test light that contains the stray light at the central frequency and a phase and amplitude of the stray light at the central frequency.

2. The measurement method according to claim 1 further comprising:

separating (S1) the interference signal between the reference light and the stray light from the interference signal between the reference light and the test light that does not contain the stray light utilizing a Doppler shift.

3. The measurement method according to claim 1, further comprising:

separating (S1) the interference signal between the reference light and the stray light from the interference signal between the reference light and the test light that does not contain the stray light by arranging a light shielding plate (111) between the test object and the interference.

4. The measurement method according to claim 2 or 3, further comprising:

calculating (S2) a frequency characteristic of the phase and amplitude of the stray light utilizing the interference signal between the reference light and the stray light which has been separated and a discrete Fourier transform.

5. The measurement method according to claim 4, further comprising:

fitting (S3) the frequency characteristic of the amplitude of the stray light utilizing one of a Gaussian function, a Lorentzian function, and a void function.

6. The measurement method according to claim 4 or 5, further comprising:

fitting (S3) the frequency characteristic of the phase of the stray light utilizing a linear function.

7. The measurement method according to claim 2 or 3, further comprising:

obtaining (S4) the data expressed in the Fourier spectrum of the interference signal between the reference light and the stray light through a fast Fourier transform of the interference signal between the reference light and the stray light which has been separated.

8. The measurement method according to any one of claims 1 to 7, further comprising:

obtaining (S5) data expressed in the Fourier spectrum of the interference signal between the reference light and the test light that contains the stray light through a fast Fourier transform of the interference signal between the reference light and the test light that contains the stray light.

9. The measurement method according to any one of claims 1 to 7, further comprising:

calculating (S8) the phase and amplitude of the test light that contains the stray light through a discrete Fourier transform at the central frequency of the interference signal between the reference light and the test light that contains the stray light.

10. The measurement method according to claim 4, further comprising:

fitting (S3) the frequency characteristic of the amplitude of the stray light utilizing one of a Gaussian function, a Lorentzian function, and a void function;
fitting (S3) the frequency characteristic of the phase of the stray light utilizing a linear function; and
obtaining the phase and amplitude of the stray light at the central frequency based upon the frequency characteristic of each of the phase and amplitude of the stray light which have been fitted.

11. The measurement method according to claim 1, further comprising calculating the amplitude of the test light that does not contain the stray light from the test object split by a beam splitter (120) arranged between the test object and the interferometer,
**characterized in that** the phase at the central frequency of the test light that does not contain the stray light is calculated based upon the phase and amplitude at the central frequency of the test light that contains the stray light, the phase and amplitude of the stray light at the central frequency, and the amplitude at the central frequency of the test light that does not contain the stray light.

12. A program that enables a computer to execute a calculation method for calculating a shape of an object surface of a test object or a test object distance, the method comprising:

calculating a central frequency $f_{cen}$ expressed by the following expression where f is a frequency and DataC(f) is data expressed in a Fourier spectrum of an interference signal between reference light and test light that does not contain stray light generated in a interferometer, which is obtained by subtracting data expressed in the Fourier spectrum of an interference signal between the reference light and stray light from data expressed in the Fourier spectrum of an interference signal between the reference light and test light that contains the stray light; and

$$ f_{cen} = \frac{\left| \sum DataC(f) \times f \right|}{\left| \sum DataC(f) \right|} $$

calculating a phase of the test light that does not contain the stray light at the central frequency that has been calculated, based upon a phase and amplitude of the test light that contains the stray light at the central frequency and a phase and amplitude of the stray light at the central frequency.

13. A non-transitory tangible medium configured to store the program according to claim 12.

FIG. 1

FIG. 2

CALCULATION CONDITION

$\Delta f = 20MHz$

$f_{Dop}(t) = 1.5MHz$

$r_{tar}(x,y) = 0.8$

$r_{err} = 0.2$

$f = \Delta f + 2f_{Dop}(t)$

$\varphi = \varphi_{tar}(x,y,t)$

DC

$f = 2f_{Dop}(t)$

$\varphi = \varphi_{tar}(x,y,t) - \varphi_{err}$

$f = \Delta f$

$\varphi = \varphi_{err}$

FIG. 3

CALCULATION CONDITION

$\Delta f = 20MHz$

$f_{Dop}(t) = 0MHz$

$r_{tar}(x,y) = 0.8$

$r_{err} = 0.2$

DC

$f = \Delta f$

$\varphi = tan^{-1}\left(\dfrac{r_{tar}(x,y)sin(\varphi_{tar}(x,y,t)) + r_{err}\,sin(\varphi_{err})}{r_{tar}(x,y)cos(\varphi_{tar}(x,y,t)) + r_{err}\,cos(\varphi_{err})}\right)$

FIG. 4

EP 2 623 924 A1

```
┌──────────────────────────────────────┐        ┌──────────────────────────────────────┐
│      ADVANCE MEASUREMENT STARTS      │        │      FORMAL MEASUREMENT STARTS       │
└──────────────────────────────────────┘        └──────────────────────────────────────┘
                    │                S1                         │                 S5
┌──────────────────────────────────────┐        ┌──────────────────────────────────────┐
│    SEPARATE STRAY LIGHT COMPONENT    │        │    OBTAIN DATA B BY EXECUTING FFT    │
└──────────────────────────────────────┘        │   FOR DATA CONTAINING STRAY LIGHT    │
                    │                S2          └──────────────────────────────────────┘
┌──────────────────────────────────────┐                       │                 S6
│      CALCULATE r_err AND Φ_err       │        ┌──────────────────────────────────────┐
│        NEAR Δf USING DFT             │        │           PRODUCE DATA C             │
└──────────────────────────────────────┘        │ DataC (f) = DataB (f) – DataA (f)    │
                    │                S3          └──────────────────────────────────────┘
┌──────────────────────────────────────┐                       │                 S7
│  PROVIDE FITTING FOR r_err AND Φ_err │        ┌──────────────────────────────────────┐
│  AND PRODUCE FUNCTIONS OF r_err^Fit(t)│       │ DETERMINE CENTRAL FREQUENCY f_cen OF THE│
│         AND Φ_err^Fit(t)             │        │  INTERFERENCE SIGNAL BETWEEN THE TEST │
└──────────────────────────────────────┘        │  LIGHT THAT DOES NOT CONTAIN STRAY LIGHT│
                    │                S4          │         AND REFERENCE LIGHT           │
┌──────────────────────────────────────┐        └──────────────────────────────────────┘
│           PRODUCE DATA A             │                       │                 S8
│       USING FITTED FUNCTION          │        ┌──────────────────────────────────────┐
│ DataA(f)=r_err^Fit(f)exp(i 2πφ_err^Fit(f))│   │    PERFORM DFT FOR DATA THAT AGAIN   │
└──────────────────────────────────────┘        │ CONTAINS THE STRAY LIGHT AT FREQUENCY f_cen│
                    │                            │ AND CALCULATES r_mea(x, y, t) AND Φ_mea(x, y, t)│
┌──────────────────────────────────────┐        └──────────────────────────────────────┘
│      ADVANCE MEASUREMENT ENDS        │                       │                 S9
└──────────────────────────────────────┘        ┌──────────────────────────────────────┐
                                                 │ CALCULATE Φ_tar(x, y, t) BASED UPON r_mea(x, y, t),│
                                                 │ Φ_mea(x, y, t), r_err^Fit(f_cen), AND Φ_err^Fit(f_cen)│
                                                 └──────────────────────────────────────┘
                                                                │
                                                 ┌──────────────────────────────────────┐
                                                 │      FORMAL MEASUREMENT ENDS         │
                                                 └──────────────────────────────────────┘
```

$$DataC\ (f) = DataB\ (f) - DataA\ (f)$$

$$DataA(f) = r_{err}^{Fit}(f)\exp(i\ 2\pi\varphi_{err}^{Fit}(f))$$

## FIG. 5

FIG. 6

FIG. 7

FIG. 8

FIG. 9

FIG. 10

FIG. 11

FIG. 12

EP 2 623 924 A1

Europäisches
Patentamt
European
Patent Office
Office européen
des brevets

**EUROPEAN SEARCH REPORT**

Application Number

EP 13 00 0404

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2008/304077 A1 (DEMAREST FRANK C [US]) 11 December 2008 (2008-12-11) * abstract; figures 1-4 * * paragraph [0003] - paragraph [0006] * * paragraph [0079] - paragraph [0217] * | 1-13 | INV. G01B9/02 |
| Y,D | US 6 246 481 B1 (HILL HENRY A [US]) 12 June 2001 (2001-06-12) * abstract; figures 1,2 * * column 15 - columns 18,57,58 * | 1,2,5-13 | |
| Y | US 2003/137671 A1 (DE GROOT PETER J [US] ET AL) 24 July 2003 (2003-07-24) * abstract; figure 1 * * paragraph [0040] - paragraph [0045] * | 1-13 | |

| | | | TECHNICAL FIELDS SEARCHED (IPC) |
|---|---|---|---|
| | | | G01B |

The present search report has been drawn up for all claims

| Place of search | Date of completion of the search | Examiner |
|---|---|---|
| Munich | 11 April 2013 | Stanciu, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

18

## ANNEX TO THE EUROPEAN SEARCH REPORT
## ON EUROPEAN PATENT APPLICATION NO.

EP 13 00 0404

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2013

| Patent document cited in search report | Publication date | Patent family member(s) | Publication date |
|---|---|---|---|
| US 2008304077 A1 | 11-12-2008 | US 2008304077 A1<br>WO 2008154357 A1 | 11-12-2008<br>18-12-2008 |
| US 6246481 B1 | 12-06-2001 | EP 1303736 A2<br>TW 539847 B<br>US 6246481 B1<br>WO 0136901 A2 | 23-04-2003<br>01-07-2003<br>12-06-2001<br>25-05-2001 |
| US 2003137671 A1 | 24-07-2003 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4717308 B
- JP 2008177561 A